## Europäisches Patentamt
## European Patent Office
## Office européen des brevets

(19)

(11) Numéro de publication: **0 065 461 B1**

(12)

# FASCICULE DE BREVET EUROPEEN

(45) Date de publication du fascicule du brevet:
**19.02.86**

(51) Int. Cl.⁴: **A 01 M 21/04**

(21) Numéro de dépôt: **82400856.9**

(22) Date de dépôt: **10.05.82**

(54) **Dispositif pour déposer sur des plantes un liquide de traitement tel qu'un désherbant.**

(30) Priorité: **20.05.81 FR 8110012**

(43) Date de publication de la demande:
**24.11.82 Bulletin 82/47**

(45) Mention de la délivrance du brevet:
**19.02.86 Bulletin 86/8**

(84) Etats contractants désignés:
**FR GB**

(56) Documents cités:
**EP - A - 0 056 012
WO - A - 80/00666
US - A - 1 764 952
US - A - 2 769 668
US - A - 4 219 964**

(73) Titulaire: **TECNOMA, 54, Rue Marcel Paul,
F-51206 Epernay (FR)**

(72) Inventeur: **Ballu, Patrick Jean-Marie, 4, rue de l'Isle,
F-51100 Reims (FR)**

(74) Mandataire: **de Boisse, Louis, CABINET DE
BOISSE 37, Avenue Franklin D. Roosevelt, F-75008 Paris
(FR)**

ACTORUM AG

## Description

La présente invention concerne un dispositif mobile pour déposer sur des plantes un liquide de traitement tel qu'un désherbant.

La demande antérieure de brevet PCT WO 80/00666 a décrit un dispositif de ce genre, comportant au moins une mèche, dont une fraction importante de la longueur est immergée dans un réservoir de liquide de traitement, le reste de la mèche étant disposé à l'extérieur de ce réservoir, à très faible distance de sa paroi externe. Cette disposition connue ne permet que difficilement ne régler la quantité de liquide qui imbibe la mèche et celle qui est déposée sur les plantes. D'autre part, lorsque ce dispositif de l'art antérieur est déplacé au niveau des plantes à traiter, dans une direction transversale à celle des mèches, chaque plante vient d'abord au contact d'une fraction de mèche, qui dépose sur la plante une petite quantité de liquide de traitement. Ensuite, cependant, la plante est heurtée par la partie frontale de la paroi latérale du réservoir, qui la courbe vers le sol, de façon à permettre le passage du réservoir au-dessus de la rangée de plantes qui vient d'être traitée. Comme, en outre, le réservoir présente des dimensions externes très supérieures à celles de chaque mèche, il en résulte un risque important de rupture des plantes, surtout lorsque la hauteur à laquelle l'ensemble du réservoir et des mèches est déplacé au-dessus du sol, est mal adaptée à la hauteur moyenne des plantes.

La demande antérieure de brevet européen EP 0 056 012 appartenant à l'état de la technique au sens de l'Article 54, paragraphe 3 de la CBE décrit également un dispositif du même genre, comportant au moins un réservoir de liquide, au moins un tube de distribution, qui est placé en dessous au fond dudit réservoir, à peu près perpendiculairement à la direction de déplacement du dispositif, de façon à être alimenté en liquide à partir d'au moins une zone dudit fond, et qui présente plusieurs paires de dérivations, dans lesquelles les extrémités de plusieurs mèches sont immobilisées par des moyens de serrage et d'étanchéité, de telle sorte que le reste de chaque mèche s'étende à l'extérieur du tube de distribution. D'autre part, des moyens sont prévus pour supporter chaque mèche en son milieu de façon à lui conférer la forme d'un V ayant sa pointe tournée dans le sens de déplacement du dispositif. En outre, les paires de dérivations sont imbriquées de telle sorte que les brins voisins de deux mèches voisines, en V, passent l'un au-dessus de l'autre, à une petite distance en avant du tube de distribution. Ce dispositif de l'art antérieur présente, sur celui considéré au paragraphe précédent, l'avantage que, lors du passage du dispositif au-dessus d'une rangée de plantes, celles-ci viennent seulement en contact avec les mèches en V, qui les courbent doucement vers le sol, en évitant ainsi qu'elles ne soient heurtées brutalement par le réservoir lui-même, qui passe ainsi au-dessus des plantes, légèrement courbées,

sans les endommager. Cependant, il est assez fréquent que certaines des plantes viennent alors s'encastrer entre les deux brins voisins de deux mèches en V, voisines, et ne soient ainsi arrachées du sol lorsque le dispositif poursuit son mouvement.

Le dispositif selon la présente invention est du genre indiqué initialement, et il ne présente aucun des inconvénients des dispositifs de l'art antérieur, qui viennent d'être mentionnés.

Le dispositif selon la présente invention comporte également au moins un tube de distribution qui est à peu près perpendiculaire à la direction de déplacement du dispositif, qui peut être alimenté en liquide, et qui présente au moins deux passages pour le liquide, dans lesquels les extrémités d'au moins une mèche sont immobilisées par des moyens de serrage et d'étanchéité, de telle sorte que le reste de la mèche s'étende à l'extérieur du tube de distribution parallèlement à celui-ci; il est caractérisé en ce que au niveau de chacun des passages pour le liquide est monté un conduit de dérivation à peu près perpendiculaire au tube de distribution, cependant que les moyens de serrage et d'étanchéité comprennent une bague fendue conique en matière déformable, qui est engagée sur l'extrémité de la mèche, et avec laquelle un écrou, vissé sur le conduit de dérivation correspondant du tube de distribution, permet d'écraser plus ou moins ladite mèche, de façon à régler le débit de liquide dans la mèche, entre une valeur nulle et une valeur maximale.

Le dispositif selon la présente invention offre l'avantage de permettre un contrôle aisé du liquide amené dans la mèche, puisque ce contrôle peut avoir lieu au niveau de la zone, de faible étendue, de la mèche dans laquelle le liquide est amené. En outre, chacune des mèches du dispositif selon la présente invention s'étend librement, sans support, à une certaine distance du tube de distribution, et à peu près parallèlement à ce tube. En effet, chaque mèche est maintenue dans cette position par les conduits de dérivation et elle est nécessairement écartée du tube de distribution d'une distance au moins égale à la longueur des tubes. Il n'y a donc aucun risque d'arrachement des plantes hors du sol, comme cela se produit avec le dispositif de l'art antérieur, dans lequel deux mèches voisines en V se recouvrent au niveau de leurs brins voisins, dans une zone où une plante peut venir s'encastrer et être arrachée lors de la poursuite du déplacement du dispositif. Avec le dispositif selon la présente invention, on évite également que la paroi frontale du réservoir de liquide de traitement, de grandes dimensions, ne vienne heurter les plantes et ne les brise éventuellement, puisque, selon la présente invention, les plantes viennent seulement en contact avec les mèches imbibées de liquide qui les courbent doucement vers le sol, de telle sorte qu'elles laissent passage au réservoir de liquide placé au-dessus du sol à un niveau supérieur à celui des mèches et des tubes de distribution.

L présente invention concerne également un dispositif portable qui, en plus de présenter la caractéristique générale mentionnée précédemment, est caractérisé en ce que le tube de distribution est fixé à l'extrémité inférieure d'une lance à main, qui le relie au fond du réservoir, éventuellement par l'intermédiaire d'un tuyau souple, ce qui permet par exemple à l'utilisateur de porter le réservoir, par exemple à l'aide d'une courroie.

A titre d'exemples, on a décrit ci-dessous et illustré schématiquement au dessin annexé deux formes de réalisation du dispositif selon la présente invention.

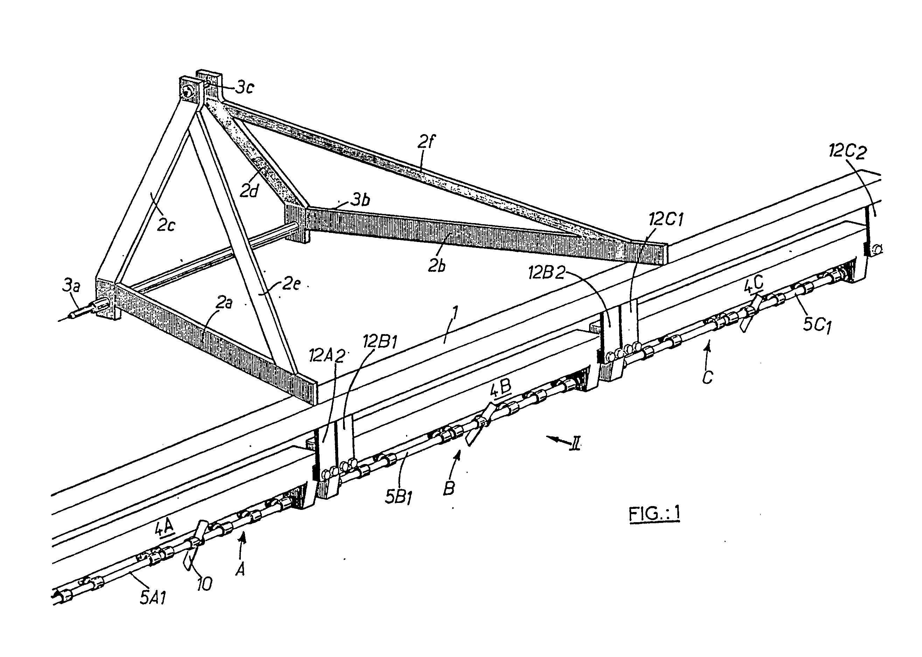

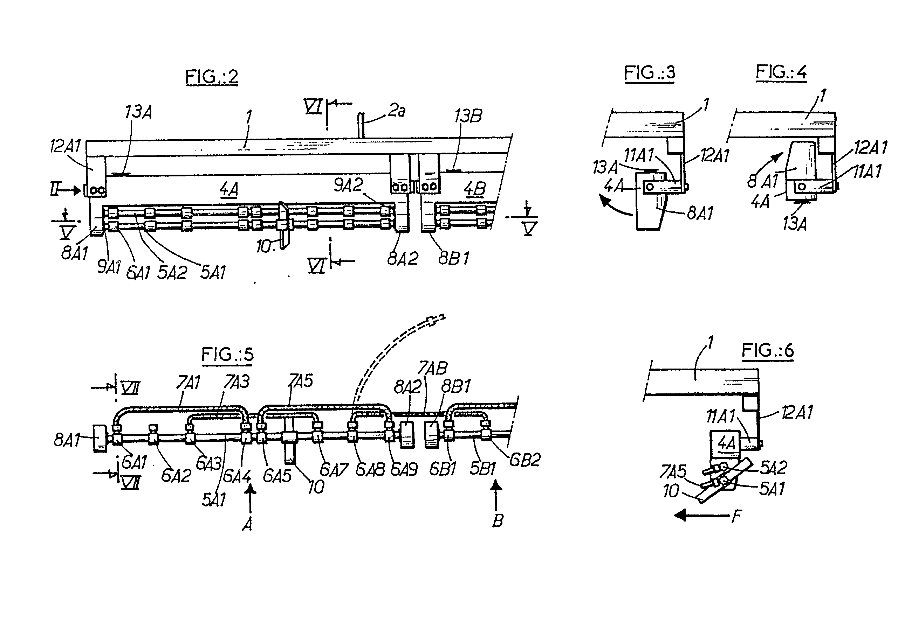

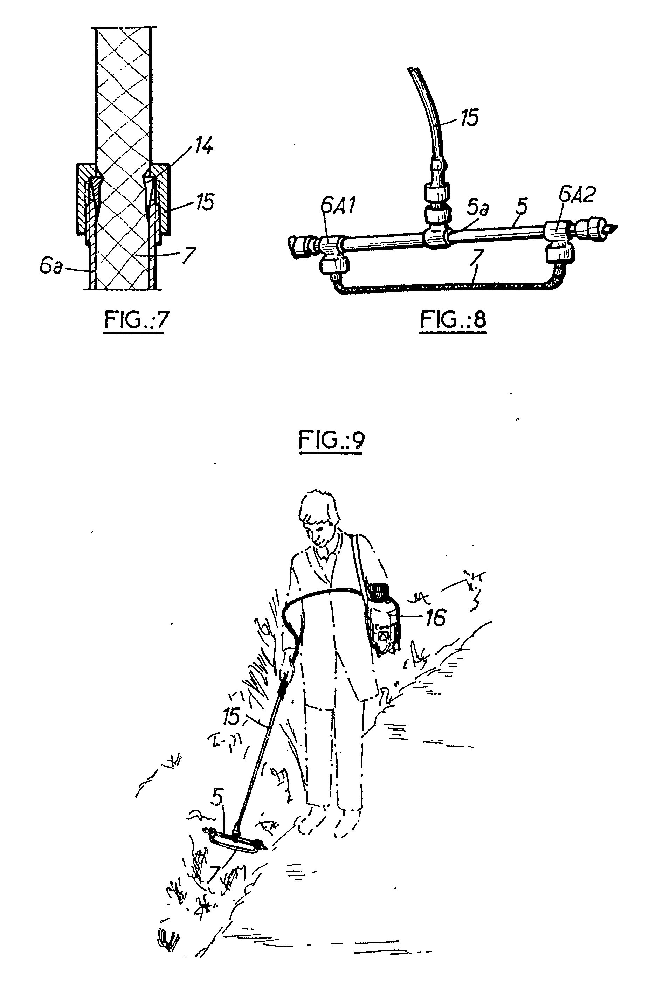

La figure 1 est une vue en perspective de la première forme de réalisation; la figure 2 est une vue dans le sens de la flèche II de la figure 1; la figure 3 est une vue dans le sens de la flèche III de la figure 2; la figure 4 est une vue correspondant à la figure 3, montrant la rampe de distribution du liquide en position hors service; les figures 5 et 6 sont des vues en coupe respectivement suivant les lignes V-V et VI-VI de la figure 2; la figure 7 est une vue en coupe selon la ligne VII-VII de la figure 5; les figures 8 et 9 représentent la seconde forme de réalisation et son mode d'emploi.

La vue en perspective de la figure 1 montre trois rampes, A, B et C, qui sont alignées horizontalement en dessous d'une poutre horizontale 1, sur la face supérieure de laquelle sont fixées, par exemple soudées, les extrémités de deux poutrelles 2a, 2b; les éléments 1, 2a, 2b forment, avec d'autres poutrelles, 2c, 2d, 2e, 2f, un bâti comportant deux portées horizontales inférieures, 3a et 3b, et une portée horizontale supérieure, 3c; les trois portées, 3a, 3b, 3c, permettent d'accrocher de façon amovible l'ensemble du dispositif à un support (non représenté), auquel plusieurs dispositifs analogues peuvent être également accrochés, et qui est lui-même susceptible d'être attelé à un tracteur, par exemple à ses organes usuels d'attelage à trois points.

Chacune des rampes A à C est formée par un réservoir allongé, 4A, 4B ou 4C, sensiblement horizontal, qui alimente par ses extrémités deux tubes de distribution, tels que 5A1 et 5A2, superposés comme visible sur la figure 2, et sensiblement parallèles à l'axe horizontal du réservoir correspondant, 4A. Dans chacun des deux tubes, par exemple 5A1, de chacune des rampes, par exemple A, sont insérés plusieurs raccords en T, tels que 6A1, 6A2 ... 6A9 (figure 5); trois mèches, par exemple, 7A1, 7A3 et 7A5, constituées en un matériau poreux approprié, ont leurs extrémités immobilisées respectivement dans les branches de certains des raccords en T, qui sont transversales au tube d'alimentation correspondant, 5A1; par exemple, les extrémités de la mèche 7A1 sont immobilisées dans les branches transversales des raccords en T, 6A1 et 6A4. Comme visible sur la figure 5, la disposition est choisie de préférence de manière que les parties des mèches, qui sont tendues parallèlement au tube correspondant de distribution, forment une sorte de «front» continu, tourné vers l'avant, dans le sens d'avancement des rampes, qui est indiqué par la flèche F sur la figure 6.

D'autre part, les extrémités du réservoir allongé, par exemple 4A, de chaque rampe, sont prolongées vers le bas par deux pots, 8A1 et 8A2, et chacun des tubes de distribution correspondants, 5A1 et 5A2, est monté de façon que ses deux extrémités débouchent respectivement dans les deux pots 7A1 et 7A2; de préférence, les extrémités de chacun des tubes de distribution, 5A1 et 5A2, sont montées privotantes dans des paliers, tels que 9A1 et 9A2, prévus sur les parois en regard des deux pots 8A1 et 8A2; des joints sont prévus dans les paliers tels que 9A1 et 9A2 pour éviter que le liquide contenu dans les pots correspondants ne s'échappe à l'extérieur; d'autre part, des moyens connus, non représentés en détail, par exemple des écrous ou des vis, sont prévus pour permettre de bloquer les tubes de distribution, 5A1, 5A2, montés pivotants, dans des positions angulaires choisies. Un organe de préhension 10 est par exemple fixé transversalement au pourtour du tube inférieur de distribution, 5A1, pour permettre de le faire tourner dans ses paliers lorsque les moyens de blocage correspondants ont été desserrés; comme visible sur la figure 6, ceci permet de modifier les orientations relatives des mèches alimentées par les deux tubes superposés, par exemple 5A1 et 5A2, d'une même rampe, et aussi de modifier leur position par rapport aux plantes à traiter, en fonction de leur hauteur au-dessus du sol, ou de leur forme ... etc..; le réservoir, par exemple 4A, de chacune des rampes est lui-même monté de façon à pouvoir pivoter par rapport à la poutre 1 du bâti, autour d'un axe sensiblement horizontal; on voit notamment sur les figures 3 et 4 que chaque réservoir, par exemple 4A, est muni à chacune de ses extrémités d'un pivot supporté par un bras horizontal, 11A1, d'une équerre, dont l'autre bras, par exemple 12A1, est fixé en dessous de la poutre 1 (voir aussi la figure 2). La figure 3 montre le réservoir pivotant 4A dans sa position de service, pour laquelle ses deux pots, tels que 8A1, sont tournés vers le bas, les tubes de distribution 5A1 et 5A2, et les mèches qu'ils alimentent, se trouvant alors par suite en dessous dudit réservoir 4A, comme visible sur les figures 2 et 6. La figure 4 montre, par contre, le réservoir 4A dans sa position hors service, pour laquelle ses pots, tels que 8A1, sont tournés vers le haut, les tubes de distribution 5A1 et 5A2 et les mèches qui les alimentent se trouvant alors au-dessus du réservoir 4A; la paroi de chaque réservoir, tel que 4A, qui est opposée à ses pots 8A1 et 8A2, est munie d'un orifice de remplissage, tel que 13A, pourvu d'un bouchon de fermeture étanche; le remplissage de chaque réservoir a lieu dans la position de service illustrée sur la figure 3, tandis que sa vidange a lieu dans la position hors service, illustrée sur la figure 4, qui permet d'obtenir aisément une vidange complète.

La disposition des pots tels que 8A1 et 8A2 aux deux extrémités de chacun des réservoirs tels que 4A est avantageuse notamment dans la mesure où elle assure certainement l'alimentation des tubes de distribution 5A1 et 5A2, quel que soit le niveau de remplissage du réservoir 4A, et quelle que soit éventuellement l'inclinaison de la rampe correspondante sur l'horizontal.

Comme visible sur la figure 5, deux rampes voisines, par exemple A et B, peuvent être mises en série au niveau de leurs tubes respectifs de distribution, par exemple 5A1 et 5B1; il suffit, pour cela, de raccorder entre elles par une mèche 7AB les branches transversales respectives du raccord en T, 6A8, inséré dans le tube de distribution 5A1, et du raccord en T, 6B2, inséré dans le tube de distribution 5B1; de préférence, ce raccordement est rendu facultatif en réalisant la branche transversale de l'un au moins des deux raccords en T, de manière à pouvoir en extraire l'extrémité correspondante de la mèche, comme indiqué en traits interrompus sur la figure 5, un bouchon (non représenté) étant alors utilisé pour fermer de façon étanche ladite branche transversale du raccord en T (par exemple 6B2); la même disposition peut être adoptée pour obturer les raccords en T auxquels, dans certains cas, n'aboutit aucune mèche (par exemple 6A2 sur la figure 5).

La vue en coupe de la figure 7 montre que l'extrémité de chaque mèche 7 est immobilisée dans la branche transversale 6a du raccord en T correspondant, par des moyens de serrage et d'étanchéité, qui, dans la forme de réalisation illustrée, comprennent une bague fendue, conique 14, en matière déformable, par exemple en matière plastique, qui est engagée sur l'extrémité de la mèche 7, et avec laquelle un écrou 15, vissé sur la branche correspondante, 6a, du raccord en T, permet d'écraser plus ou moins ladite mèche 7, de façon à régler le débit de liquide dans la mèche, c'est-à-dire le débit du liquide qui passe du tube de distribution correspondant dans le raccord en T, puis dans la mèche 7 engagée dans sa branche transversale 6a. La bague fendue 14 peut être réalisée, de façon connue en soi, de manière que, pour un serrage approprié de l'écrou 15, elle écrase presque complètement la mèche 7, de façon à annuler le débit du liquide pénétrant dans ladite mèche, alors que, lorsque l'écrou 15 est complètement desserré, le débit de liquide dans la mèche 7 prend une valeur maximale; cette disposition offre l'avantage de permettre de régler très facilement le débit de liquide dans chacune des mèches 7, simplement en modifiant le serrage des écrous, tels que 15, qui sont vissés sur les branches transversales des deux raccords en T reliés par la mèche considérée.

La présente invention n'est pas limitée à la forme de réalisation précédemment décrite. Elle englobe toutes ses variantes. Le nombre des rampes alignées, A, B . . ., le nombre des tubes de distribution, 5A1, 5A2, et le nombre des mèches qui leur sont associées dans chaque rampe sont matières à option. La ou les rampes pourraient être montées sur un véhicule poussé ou tracté par un tracteur. Le montage pivotant du réservoir de chaque rampe ainsi que de ses tuyaux de distribution est matière à option. Les raccords en T pourraient être remplacés par de simples dérivations transversales des tubes de distribution, qui seraient filetées extérieurement pour permettre d'y serrer les extrémités des mèches au moyen d'écrous appropriés. Dans une variante, les tubes de distribution peuvent être en forme de U, leurs extrémités étant raccordées directement à celles du fond du réservoir correspondant, qui ne comporterait plus alors de pots à ses extrémités. Les moyens de serrage des extrémités des mèches dans les dérivations des tubes de distribution sont matières à option; ils pourraient comporter des vis à action radiale et des joints d'étanchéité classiques.

Chaque réservoir tel que 4A peut être réalisé d'une seule pièce, par exemple par rotomoulage, avec ses pivots, les paliers des tubes de distribution, et éventuellement des butées pour les pivotements.

Dans une autre forme de réalisation de l'invention, une mèche unique (7 sur la figure 8), est étendue entre les deux extrémités d'un tube de distribution 5, qui peut être monté, dans sa région médiane, 5a, à l'extrémité d'une lance à main 15 (voir aussi la figure 9); cette lance 15 est alimentée en liquide de traitement à partir d'un réservoir portable 16, dans lequel le liquide de traitement est stocké à la pression atmosphérique ou en surpression. Un tel dispositif portable est particulièrement avantageux dans la mesure où il permet une application manuelle très précise de désherbant.

## Revendications

1. Dispositif mobile pour déposer sur des plantes un liquide de traitement tel qu'un désherbant, comportant au moins un tube de distribution (5) qui est à peu près perpendiculaire à la direction de déplacement du dispositif, qui peut être alimenté en liquide, et qui présente au moins deux passages pour le liquide, dans lesquels les extrémités d'au moins une mèche (7) sont immobilisées par des moyens de serrage et d'étanchéité (14, 15), de telle sorte que le reste de la mèche (7) s'étende à l'extérieur du tube de distribution (5) parallèlement à celui-ci, caractérisé en ce qu'au niveau de chacun desdits passages pour le liquide est monté un conduit de dérivation (6) à peu près perpendiculaire au tube de distribution (5), cependant que les dits moyens de serrage et d'étanchéité comprennent une bague fendue conique (14) en matière déformable, qui est engagée sur l'extrémité de la mèche (7), et avec laquelle un écrou (15), vissé sur le conduit de dérivation (6) correspondant du tube de distribution (5), permet d'écraser plus ou moins ladite mèche (7), de façon à régler le débit de liquide dans la mèche (7), entre une valeur nulle et une valeur maximale.

2. Dispositif selon la revendication 1, caractérisé en ce que l'alimentation en liquide se fait par l'intermédiaire d'au moins un réservoir (4), chaque réservoir (4) ayant une forme allongée, et ses extrémités étant prolongées vers le bas par deux pots (8A1, 8A2), chaque tube de distribution (5) étant monté de façon que ses deux etrémités débouchent respectivement dans les deux pots (8A1, 8A2).

3. Dispositif selon la revendication 2, caractérisé en ce que les extrémités de chaque tube de distribution (5) sont montées pivotantes, de façon blocable et étanche, dans des paliers (9A1, 9A2), prévus sur les parois en regard des deux pots (8A1, 8A2).

4. Dispositif selon l'une quelconque des revendications 2 et 3, caractérisé en ce que chaque réservoir allongé (4) est monté de façon à pouvoir pivoter sur un bâti (1), autour d'un axe sensiblement horizontal, entre une position de service, où chaque tube de distribution (5) et chaque mèche (7) sont en-dessous dudit réservoir (4), et une position hors service, où chaque réservoir (4) est en dessous desdits tube (5) et mèche (7) pour faciliter la vidange du réservoir (4).

5. Dispositif selon la revendication 4, caractérisé en ce que son bâti (1–2a . . . 2f) comporte des moyens d'accrochage (3a, 3b, 3c) à un support susceptible d'être attelé à un tracteur.

6. Dispositif selon l'une quelconque des revendications 2 à 5, caractérisé en ce qu'il comporte plusieurs ensembles alignés (A, B, C) composés d'un réservoir allongé et d'un tube de distribution, dont les tubes respectifs de distribution (5A, 5B) peuvent être raccordés deux à deux par des mèches (7AB), de préférence amovibles.

8. Dispositif portable selon la revendication 1, caractérisé en ce que le tube de distribution (5) est fixé à l'extrémité inférieure d'une lance à main (15), qui le relie au fond du réservoir (16) d'alimentation, éventuellement par l'intermédiaire d'un tuyau souple.

**Claims**

1. A device for depositing a treatment liquid, such as a weedkiller, on plants, comprising at least one dispensing tube (5) which is approximately perpendicular to the movement direction of the device, and which is able to be supplied with liquid and has at least two outlets for the liquid, the ends of at least one wick (7) being immobilized in said outlets by clamping and sealing means (14, 15), so that the remainder of the wick (7) extends outside the dispensing tube and parallel to it, characterized in that, at each of the said outlets for the liquid, a branch (6) is mounted approximately perpendicular to the dispensing tube (5), and the said clamping and sealing means comprise a conical split ring (14), made of a deformable material, which is engaged on the end of the wick (7) and with which a nut (15), screwed to the corresponding branch (6) of the dispensing tube (5) makes it possible to compress the said wick (7) to a greater or lesser extent, so as to regulate the flow of the liquid between a null value and a maximum value.

2. A device according to claim 1, characterized in that the supply with liquid is carried through at least one tank (4), each tank (4) being of elongate form and having its ends extended downwards by two chambers (8A1, 8A2), and each dispensing tube (5) is so mounted, that its two ends come out respectively into the two chambers (8A1, 8A2).

3. A device according to claim 2, characterized in that the ends of each dispensing tube (5) are mounted so as to pivot, in a lockable and leaktight manner, in bearings (9A1, 9A2) provided on the opposite walls of the two chambers (8A1, 8A2).

4. A device according to any one of claims 2 and 3, characterized in that each elongated tank (4) is mounted so as to be able to pivot on a frame (1), about a substantially horizontal axis, between a service position, in which each dispensing tube (5) and each wick (7) are underneath the said tank (4), and an out-of-service position, in which each tank (4) is underneath the said tube (5) and the said wick (7), in order to facilitate the emptying of the tank.

5. A device according to claim 4, characterized in that its frame (1–2a . . . 2f) comprises means (3a, 3b, 3c) for fastening to a support capable to be coupled to a tractor.

6. A device according to any one of claims 2 to 5, characterized in that it comprises several aligned sets (A, B, C) each consisting of an elongated tank and a dispensing tube, the respective dispensing tubes (5A, 5B) being able to be connected in pairs by wicks (7AB), which preferably are detachable.

7. A portable device according to claim 1, characterized in that the dispensing tube (5) is fitted to the lower end of a tubular handle (15) which connects it to the bottom of a feeding tank (16) possibly through a flexible tube.

**Patentansprüche**

1. Bewegbare Vorrichtung zum Auftragen einer Behandlungsflüssigkeit, wie z.B. eines Unkrautvernichtungsmittels, auf Pflanzen, mit mindestens einer Verteilungsleitung (5), die etwa rechtwinklig zur Bewegungsrichtung der Vorrichtung verläuft und mit der Behandlungsflüssigkeit speisbar ist und mindestens zwei Durchlässe für die Behandlungsflüssigkeit aufweist, in denen die Enden mindestens eines Dochtes (7) durch Mittel (14, 15) zum Klemmen und Dichten derart fixiert sind, dass sich der Rest des Dochtes (7) ausserhalb der Verteilungsleitung (5) und parallel zu dieser erstreckt, dadurch gekennzeichnet, dass in Höhe eines jeden der genannten Durchlässe für die Behandlungsflüssigkeit eine etwa rechtwinklig zur Verteilungsleitung (5) verlaufende Abzweigleitung (6) angeordnet ist und dass die genannten Mittel zum Klemmen und Dichten, bestehend aus einem geschlitzten konischen Ring (14) aus nachgiebigem Material, der das Ende des Dochtes (7) umgreift und einer mit dem konischen Ring zusammenwirkenden Überwurfmutter (15), die auf die korrespondierende Abzweigleitung (6) der Verteilungsleitung aufgeschraubt ist, gestatten, den Docht (7) mehr oder weniger zusammenzudrücken und so den Flüssigkeitsstrom im Docht (7) zwischen einem Wert Null und einem Maximalwert zu regeln.

2. Vorrichtung nach Anspuch 1, dadurch gekennzeichnet, dass die Speisung mit Behandlungsflüssigkeit über mindestens ein Reservoir (4) erfolgt, wobei jedes Reservoir (4) eine längliche Form aufweist und seine Enden durch zwei Töpfe (8A1, 8A2) nach unten verlängert sind, wobei jede Verteilungsleitung (5) so montiert ist, dass ihr eines Ende in einen und ihr anderes Ende in den anderen der beiden Töpfe (8A1, 8A2) einmündet.

3. Vorrichtung nach Anspruch 2, dadurch gekennzeichnet, dass die Enden jeder Verteilungsleitung (5) schwenkbar, jedoch arretierbar und dicht in Lagern (9A1, 9A2) montiert sind, die sich an einander gegenüberliegenden Wänden der beiden Töpfe (8A1, 8A2) befinden.

4. Vorrichtung nach einem der Ansprüche 2 und 3, dadurch gekennzeichnet, dass jedes längliche Reservoir (4) um eine im wesentlichen horizontale Achse schwenkbar an einem Gestell (1) befestigt ist zur Schwenkung zwischen einer Betriebsstellung, in der jede Verteilungsleitung (5) und jeder Docht (7) unterhalb des Reservoirs (4) liegt und einer Ruhestellung, in der jedes Reservoir (4) unterhalb der Verteilungsleitung (5) und des Dochtes (7) liegt, um die Entleerung des Reservoirs zu erleichtern.

5. Vorrichtung nach Anspruch 3, dadurch gekennzeichnet, dass das Gestell (1–2a . . . 2f) an einem Traggerüst Kupplungsteile (3a, 3b, 3c) für die Ankupplung an einen Schlepper aufweist.

6. Vorrichtung nach einem der Ansprüche 2 bis 5, dadurch gekennzeichnet, dass sie mehrere in Reihe angeordnete Baugruppen (A, B, C) aufweist, die aus einem länglichen Reservoir und einer Verteilungsleitung bestehen, deren jeweilige Verteilungsleitungen (5A, 5B) durch vorzugsweise abnehmbare Dochte (7AB) paarweise verbindbar sind.

7. Tragbare Vorrichtung nach Anspruch 1, dadurch gekennzeichnet, dass die Verteilungsleitung (5) am unteren Ende eines Handstabes (15) befestigt ist, der die Verteilungsleitung (5) mit dem Boden eines Speisungsreservoirs (16) verbindet, eventuell über einen biegsamen Schlauch.

FIG.:1

FIG.:2

FIG.:3

FIG.:4

FIG.:5

FIG.:6

FIG.:7

FIG.:8

FIG.:9